# EUROPEAN PATENT APPLICATION

(11) **EP 0 630 936 A1**
(43) Date of publication of application: **28.12.1994**
(21) Application number: 94107453.6
(22) Date of filing: 13.05.1994
(51) Int. Cl.: C08K 3/00, C08K 5/00, C08K 13/02

(54) **Elastomeric polyurethane composition for molding of optical component**

(30) Priority: 24.05.1993 FR 9306143
(71) Applicant: Corning Incorporated, Corning New York 14831 (US)
(72) Inventor: Firtion, Eric Jean Henri, Corning, NY 14831 (US); Henry, David, Corning, NY 14831 (US)
(74) Representative: Aron, Georges

(57) **Abstract**

The invention relates to a thermosettable composition consisting of a non-flammable elastomeric material that includes an elastomeric polyurethane composition that has a base of an aliphatic diol, characterized by the fact that said composition also includes, in combination, antimony trioxide and at least one compound selected from among the diphenyl oxides that are substituted by at least 5 bromine atoms. The compositions have utility in the area of optical components for optical fibers.

## Description

### Background of the Invention

The invention relates to a thermosettable composition consisting of a non-flamable elastomeric polyurethane, duplicate molding of optical components with the aid of said composition, and the optical components thus obtained.

French patent No. FR-A-2 652 912 describes a procedure for the encapsulation of an optical component for the interconnection of optical fibers, with said component being in the form of a bar that is associated with said fibers, and with said procedure being characterized by the fact that said bar is inserted, in a direction that is oriented transversely in relation to the longitudinal axis of said bar, into an elongated envelope that has a U-shaped cross section that is essentially complementary to the cross section of said bar, and by the fact that a sealing product is then deposited into the portion of said envelope that is adjacent to the open contour of said envelope, in such a way as to fix said bar within said envelope.

French patent application No. 92 01008, (Publication 2694818), describes an improvement in said procedure, which improvement consists of utilizing, as a sealing product, a thixotropic composition which, after having been hardened, displays a scant water regain i.e., a water regain of less than 2 percent. The Thixotropic compositions that are offered as examples include a composition that contains a polyurethane resin that has a base of polybutadienediol, in association with a filling.

It has recently become desirable to perfect the manufacture of an encapsulated optical component through the realization of a complete coating of the latter by means of duplicate molding through the use of a thermosetting elastomer.

The conditions which the duplicate molding material must satisfy are fairly similar to the conditions imposed for the composition that serves to seal the bar within the envelope, i.e., in the sense that said material must display a scant water regain and good adhesion to the constituent material of the envelope, which constituent material is usually a metal, such as a stainless steel. Therefore, consideration has been given to the idea of using, as a duplicate molding material, a polyurethane composition of the type that is used in the formulation of the above-mentioned thixotropic sealing composition, i.e., a polyurethane composition that has a base of an aliphatic diol, and particularly a base of polybutadiene-diol, with the incorporation of a pigment, such as for example carbon black, with a view toward rendering said duplicate molding opaque and toward endowing the final product with an aesthetically attractive appearance.

Even more recently, it has appeared desirable to endow the final duplicate molded product with properties that make said final duplicate molded product non-flammable. Many flame-retardant and/or flame-resistant materials are known and available; however, it has become apparent that most of these products have the redhibitory disadvantage of degrading the properties that the duplicate molding material is required to have, and in particular the rate of water regain, the glass transition temperature T_{g}, and the viscosity, etc.

After intensive research efforts, the applicant has however discovered that when antimony trioxide and a compound selected from among the diphenyl oxides that are substituted by at least 5 bromine atoms are added in combination to a polyurethane composition that has a base of an aliphatic diol, the result, after the composition thus obtained has been hardened, is the acquisition of a material that has good properties of non-flammability in association with a low water regain (that is, a water regain of less than 2 percent, and preferably of less than 1 percent, by weight under the test conditions defined hereinbelow), with said material being perfectly appropriate for the intended application.

Therefore, the present invention relates to a thermosetting composition that consists of a non-flammable elastomeric material that includes a polyurethane composition that has a base of an aliphatic diol, characterized by the fact that said composition also includes, in a combination, antimony trioxide and at least one compound selected from among the diphenyl oxides that are substituted by at least 5 bromine atoms.

In particular, said bromated derivative of diphenyl oxide may be selected from pentabromo (diphenyl oxide), octabromo (diphenyl oxide), and decabromo (diphenyl oxide). The latter derivative is preferred because of its greater flame-retardant or flame-resistant capability.

The antimony trioxide and the bromated compound described hereinabove are advantageously utilized in a total proportion that represents 20 to 50 percent by weight of said polyurethane composition, with the ratio by weight of Sb₂O₃ to said bromated compound being between 1:9 and 2:3.

In addition to the essential ingredients defined hereinabove, the composition in accordance with the invention may contain other ingredients, particularly pigments.

The invention also relates to a procedure for the duplicate molding of optical components for optical fibers, such as components for interconnection of optical fibers, characterized by the fact that said duplicate molding is accomplished with a composition in accordance with the invention. The invention also relates to the duplicate-molded optical components thus obtained.

The duplicate molding of optical components is achieved in accordance with the conventional procedure, for example, through the injection of the composition in accordance with the invention, with the aid of a metering piston or plunger, into a mold that has been pre-heated to a temperature of approximately 50°C, advantageously after the installation of supporting sleeves around the portions of the optical fibers located adjacent to the component, in order to minimize the risk of breakage of the fibers.

After having been hardened by means of having been subjected to a moderate amount of heat, for example at a temperature of approximately 85°C, the compositions in accordance with the invention yield materials that pass the inflammability tests described in the UL 94-VO and IEC 695-2-2 standards.

The following non-limitative examples are offered for the purpose of illustrating the invention.

In the following examples an elastomeric polyurethane composition is used that was provided by the SAMI company, located in Malesherbes, Loiret, France. For every 100 parts of the composition, said composition contains 85.25 parts by weight of polybutadiene-diol and 14.75 parts by weight of a polyurethane pre-polymer that has a base of hexamethylene diisocyanate.

### EXAMPLE 1, the control example, and comparative example "A":

A thermosetting compound (1) in accordance with the invention was prepared through the careful mixing of 100 parts by weight of the above-mentioned polyurethane composition, 8.2 parts of antimony trioxide, and 26.4 parts of decabromo (diphenyl oxide).

A comparative thermosetting compound (A) was also prepared, through the careful mixing of 100 parts by weight of the above-mentioned polyurethane composition and 100 parts by weight of a flame-resistant or flame-retardant mixture of melamine isocyanurate and polyphosphate.

The viscosity of the resulting compositions in Pa/s, was measured, and then said resulting compositions were hardened at a temperature of 85°C for a period of 16 hours. Subsequently, determinations were made of the glass transition temperature T_{g}, the Shore A hardness, and the water-regain percentage after said compositions had been kept for 3 days in an enclosure at a temperature of 60°C with 98 percent relative humidity.

The results that were obtained are summarized in the following table, which also indicates the results that were obtained for a control material that was obtained from said polyurethane composition alone, without the presence of any flame-resistant or flame-retardant additives.

| **Properties** | **Control** | **Example 1** | **Comparison A** |
|---|---|---|---|
| Viscosity (Pa/s) of the composition | 8 | 40 | 11 |
| Tg (max. E") | -65 | -48 | -67 |
| Hardness (Shore A) | 45 | 60 | 50 |
| Water regain, in percent | 0.5 | >4.0 | 0.35 |
| The UL 94-VO and IEC 695-2-2 Combustion Tests | Failed | Passed | Passed |

As can be seen from the results listed above, only Example 1 in accordance with the invention satisfied the requirements with regard to non-flammability and low water regain.

Of course, it is understood that the embodiment described hereinabove is only one example, and that said example can be modified, in particular through the substitution of equivalent techniques, without thereby departing from the scope of the invention.

## Claims

1. Thermosetting composition that consists of a non-flammable elastomeric material that includes an elastomeric polyurethane composition that has a base of an aliphatic diol, characterized by the fact that said composition also includes, in combination, antimony trioxide and at least one compound selected from among the diphenyl oxides that are substituted by at least 5 bromine atoms.

2. Composition in accordance with Claim 1, characterized by the fact that said aliphatic diol is polybutadiene-diol.

3. Composition in accordance with Claim 1 or Claim 2, characterized by the fact that said compound is decabromo (diphenyl oxide).

4. Composition in accordance with Claim 1, Claim 2, or Claim 3, characterized by the fact that the total quantity of said antimony trioxide and said bromated compound represents 20 to 50 percent by weight of said polyurethane composition, with the ratio by weight of Sb₂O₃ to said bromated compound being between 1:9 and 2:3.

5. Composition in accordance with any one of claims 1 to 4, chacterized by the fact that after having been hardened, said composition has a water regain of less than 2 percent by weight.

6. Composition in accordance with any one of claims 1 to 5, characterized by the fact that after having been hardened, said composition has a water regain of less than 1 percent by weight.

7. Procedure for the duplicate molding of optical components for optical fibers, characterized by the fact that said duplicate molding is accomplished with the aid of a composition as defined in any one of claims 1 to 6.

8. Optical components for optical fibers, characterized by the fact that said optical components include a thermoset duplicate molding obtained from a composition as defined in any one of claims 1 to 6.

9. Components in accordance with Claim 8, characterized by the fact that said duplicate molding has a water regain of less than 2 percent by weight.

10. Components in accordance with Claim 8, characterized by the fact that said duplicate molding has a water regain of less than 1 percent by weight.
